# EUROPEAN PATENT SPECIFICATION

(11) **EP 4 312 921 B1**
(45) Date of publication and mention of the grant of the patent: **28.10.2026**
(21) Application number: 22776338.0
(22) Date of filing: 16.03.2022
(51) Int. Cl.: B23K 26/0622, B23K 26/062, B23K 26/082, B23K 26/08, B23K 26/53, B29D 11/00

(54) **SYSTEM FOR COORDINATING PULSE POWER AND FOCAL POSITIONS FOR A SEQUENCE OF LASER BEAM PULSES FOR FORMING A SUBSURFACE OPTICAL STRUCTURE IN AN OPHTHALMIC LENS**
SYSTEM ZUR KOORDINIERUNG VON IMPULSLEISTUNG UND BRENNPUNKTEN FÜR EINE SEQUENZ VON LASERIMPULSEN ZUR ERZEUGUNG EINER OPTISCHEN UNTERGRUNDSTRUKTUR IN EINER AUGENLINSE
SYSTÈME DE COORDINATION DE LA PUISSANCE DES IMPULSIONS ET DES POSITIONS FOCALES POUR UNE SÉQUENCE D'IMPULSIONS LASER DESTINÉES À FORMER UNE STRUCTURE OPTIQUE SOUS-SURFACIQUE DANS UNE LENTILLE OPHTALMIQUE

(30) Priority: 23.03.2021 US 202163164752 P
(43) Date of publication of application: 07.02.2024
(73) Proprietor: Clerio Vision, Inc., Rochester, New York 14618 (US)
(72) Inventor: BUTLER, Sam, Rochester, NY 14620 (US); CLAUS, Michael, Rochester (US); ELLIS, Jonathan, Tucson, AZ 85718 (US)
(74) Representative: Mathys & Squire
(86) International application number: PCT/US2022/020549
(87) International publication number: WO 2022/203916

(56) References cited:
- KR-A- 20200 136 391
- US-A- 5 367 138
- US-A- 5 701 003
- US-A1- 2007 173 794
- US-A1- 2018 045 232
- US-A1- 2019 009 360
- US-A1- 2021 018 762
- US-A1- 2021 018 762
- US-A1- 2021 052 425

## Description

The present invention relates to a system for coordinating pulse power and focal positions for a sequence of laser beam pulses for forming a subsurface optical structure in an opthalmic lens, see claim 1.

### BACKGROUND

Optical aberrations that degrade visual acuity are common. Optical aberrations are imperfections of the eye that degrade focusing of light onto the retina. Common optical aberrations include lower-order aberrations (e.g., astigmatism, positive defocus (myopia) and negative defocus (hyperopia)) and higher-order aberrations (e.g., spherical aberration, coma, and trefoil).

Existing treatment options for correcting optical aberrations include glasses, contact lenses, and reshaping of the cornea via laser eye surgery. Additionally, intraocular lenses are often implanted to replace native lenses removed during cataract surgery.

US 2021/018762 (describing the preamble of claim 1) shows an ophthalmic lens for inhibiting progression of myopia includes a central zone and an annular zone. The annular zone includes subsurface optical elements formed via laser-induced changes in refractive index of a material forming the annular zone. The subsurface optical elements are configured to modify distribution of light to the peripheral retina of a user so as to inhibit progression of myopia.

KR 2020/0136391 describes a method of processing a thin film structure comprising: providing a thin film structure comprising a stack of two or more thin film layers supported on a surface of a substrate, the stack having a depth orthogonal to the substrate surface; and forming a cut through the depth of the stack by using a direct write laser technique to scan a laser beam along a scan path covering an area of a desired cut line on a surface of the stack to ablate material of the stack along the cut line and through the depth of the stack at least to the surface of the substrate; wherein the direct write laser technique is implemented using an ultrashort pulsed laser outputting pulses with a duration of 1000 femtoseconds or less, at a wavelength in the range of 100 to 1500 nm, and delivering a fluence in the range of 50 to 100,000 mJ/cm².

### BRIEF SUMMARY

A system for coordinating pulse power and focal positions for a sequence of laser beam pulses for forming a subsurface optical structure in an ophthalmic lens according to the present invention is defined in claim 1.

Preferred embodiments are defined in the dependent claims.

The following presents a simplified summary of some embodiments of the invention in order to provide a basic understanding of the invention. This summary is not an extensive overview of the invention. It is not intended to identify key/critical elements of the invention or to delineate the scope of the invention. Its sole purpose is to present some embodiments of the invention in a simplified form as a prelude to the more detailed description that is presented later.

Embodiments described herein are directed to a system for forming a subsurface optical structure (e.g., diffractive optical structure and/or non-diffractive optical structure) in an ophthalmic lens. In many embodiments, the subsurface optical structure is formed by focusing femtosecond duration laser pulse beams to a targeted sequence of focal positions in the ophthalmic lens. The systems and methods (not covered by the present invention) described herein may be useful in forming a subsurface optical structure(s) in any suitable ophthalmic lens (e.g., intraocular lens, contact lens, cornea, glasses, and/or native lens).

According to the present invention, a system defined in claim 1 for coordinating pulse power and focal positions for a sequence of laser beam pulses for forming a subsurface optical structure in an ophthalmic lens includes a laser beam pulse source, a scanning assembly, a movable stage, a power-control computing device, a power control assembly, and a scanning-control computing device. The laser beam pulse source is operable to emit the sequence of laser beam pulses. The scanning assembly is operable to scan the sequence of laser beam pulses to focal positions within the ophthalmic lens. The power-control computing device includes a power-control memory. The power-control memory is configured to store an ordered list of pulse power data values corresponding to pulse power values for the sequence of laser beam pulses. The power control assembly is operable to control pulse power of each of the sequence of laser beam pulses. The scanning-control computing device includes a scanning-control memory. The scanning-control memory stores a scanning control program that includes instructions for controlling a scanning assembly to direct the sequence of laser beam pulses to the focal positions in the ophthalmic lens. The scanning-control computing device is configured to send a trigger signal to the power-control computing device to cause the power-control computing device to sequentially fetch a pulse power data value from the ordered list of pulse power data values. The power-control computing device is configured to control the power control assembly based on the pulse power data value to control pulse power of the sequence of laser beam pulses. In some embodiments of the second system, the power-control computing device includes a digital input/output (I/O) card. In some embodiments of the second system, the scanning-control computing device includes a programmable scanning controller.

The scanning assembly can have any suitable configuration. For example, in some embodiments of the second system, the scanning assembly includes one or more laser galvos and a depth of focus mechanism. The one or more laser galvos can be operable to control direction of each of the sequence of laser beam pulses in two directions transverse to a direction of propagation of the laser beam pulse. The depth of focus mechanism can be operable to control depth of focus for each of the sequence of laser beam pulses in the direction of propagation of the laser beam pulse.

In some embodiments of the system, the ophthalmic lens is disposed on the movable stage. The scanning-control computing device can control positioning of the movable stage relative to the laser beam pulse source.

In some embodiments of the system, the laser beam pulse source is disposed on the movable stage. The scanning-control computing device can control positioning of the movable stage relative to the ophthalmic lens.

According to the present invention, the trigger signal is generated by the scanning-control computing device. The scanning control program is thus configured to control transmission of the trigger signal by the scanning-control computing device.

According to the present invention, the scanning control program is configured to specify when a new pulse power data value is needed. The new pulse power data value is next in sequence to a current pulse power data value on the ordered list of pulse power data values.

For a fuller understanding of the nature and advantages of the present invention, reference should be made to the ensuing detailed description and accompanying drawings.

### BRIEF DESCRIPTION OF THE DRAWINGS

**FIG. 1** is a plan view illustration of an ophthalmic lens that includes subsurface optical structures with enhanced distribution of refractive index variations, in accordance with embodiments.
**FIG. 2** is a plan view illustration of a layer of the subsurface optical structures of the ophthalmic lens of **FIG. 1****.**
**FIG. 3** illustrates a cross section of an ophthalmic lens including a subsurface optical structure having multiple substructures.
**FIGS. 4A-4B** illustrate example conceptualizations of an ophthalmic lens that may be defined by a plurality of focal positions within the ophthalmic lens.
**FIG. 5** illustrates an example schematic of a system that coordinates pulse power and focal position of laser beam pulses.
**FIG. 6** illustrates a table representing a subset of a treatment plan for forming an optical structural on an ophthalmic lens.

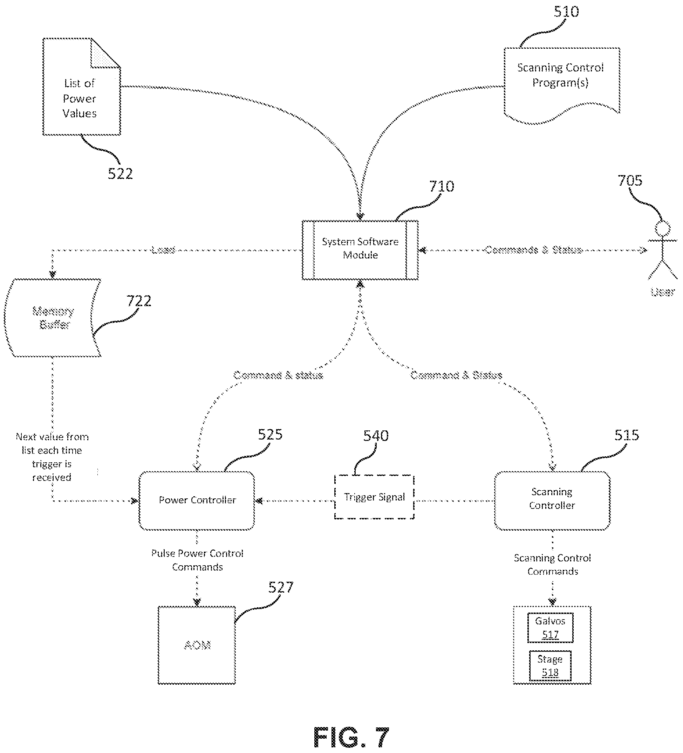

**FIG. 7** illustrates an example schematic of the system shown in FIG. 5, but from a different viewpoint so as to depict how a central system software module coordinates pulse power and focal position of laser beam pulses.
**FIG. 8** illustrates an example method (not covered by the present invention) of coordinating pulse power and focal position of laser beam pulses for forming a subsurface optical structure in an ophthalmic lens (e.g., for improving vision in a patient).
**FIG. 9** illustrates an example method (not covered by the present invention) of controlling a laser beam pulse scanning device and a laser beam pulse power-control device to form a subsurface optical structure in an ophthalmic lens.

### DETAILED DESCRIPTION

In the following description, various embodiments of the present invention will be described. For purposes of explanation, specific configurations and details are set forth in order to provide a thorough understanding of the embodiments. However, it will also be apparent to one skilled in the art that the present invention may be practiced without the specific details. Furthermore, well-known features may be omitted or simplified in order not to obscure the embodiment being described.

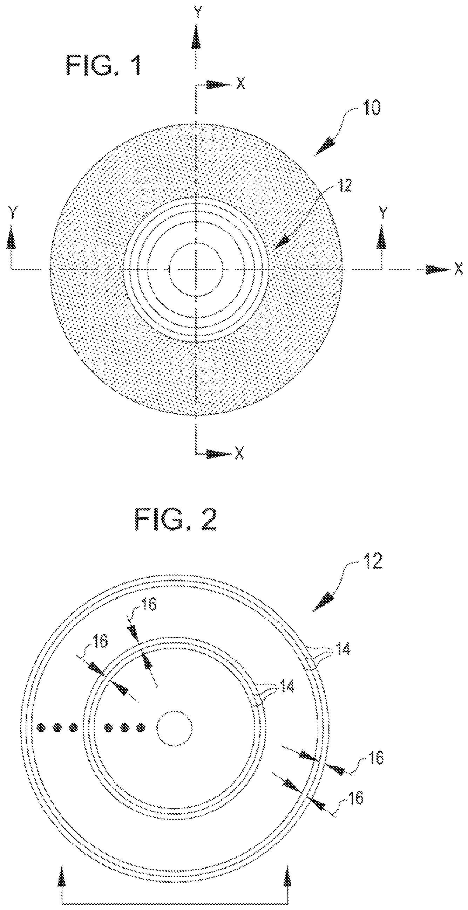

**FIG. 1** is a plan view illustration of an ophthalmic lens 10 that includes one or more subsurface optical structures 12 with refractive index variations, in accordance with embodiments. The one or more subsurface structures 12 described herein can be formed in any suitable type of ophthalmic lens including, but not limited to, intraocular lenses, contact lenses, corneas, spectacle lenses, and native lenses (e.g., a human native lens). The one or more subsurface optical structures 12 with refractive index variations can be configured to provide a suitable refractive correction for each of many optical aberrations such as astigmatism, myopia, hyperopia, spherical aberration, coma, trefoil, and other higher order aberrations as well as any suitable combination thereof.

**FIG. 2** is a plan view illustration of one of the subsurface optical structures 12 of the ophthalmic lens 10. The illustrated subsurface optical structure 12 includes concentric circular sub-structures 14 separated by intervening line spaces or gaps 16. In **FIG. 2****,** the size of the intervening line spaces 16 is shown much larger than in many actual embodiments. For example, example embodiments described herein have an outer diameter of the concentric circular sub-structures 14 of 3.75 mm and intervening line spaces 16 of 0.25 um, thereby having 7,500 of the concentric circular sub-structures 14 in embodiments where the concentric circular substructures 14 extend to the center of the subsurface optical structure 12. Each of the concentric circular sub-structures 14 can be formed by focusing suitable laser pulses onto contiguous sub-volumes of the ophthalmic lens 10 so as to induce changes in refractive index of the sub-volumes so that each of the sub-volumes has a respective refractive index different from an adjacent portion of the ophthalmic lens 10 that surrounds the sub-structure 14 and is not part of any of the subsurface optical structures 12.

In many embodiments, a refractive index change is defined for each sub-volume of the ophthalmic lens 10 that form the subsurface optical structures 12 so that the resulting subsurface optical structures 12 would provide a desired optical correction when formed within the ophthalmic lens 10. The defined refractive index changes are then used to determine parameters (e.g., average laser pulse power, laser pulse duration) of laser pulses that are focused onto the respective sub-volumes to induce the desired refractive index changes in the sub-volumes of the ophthalmic lens 10.

While the sub-structures 14 of the subsurface optical structures 12 have a circular shape in the illustrated embodiment, the sub-structures 14 can have any suitable shape and distribution of refractive index variations. For example, a single sub-structure 14 having an overlapping spiral shape can be employed. In general, one or more substructures 14 having any suitable shapes can be distributed with intervening spaces so as to provide a desired directing of light incident on the subsurface optical structures 12. More information about subsurface optical structures and forming such structures may be found in U.S. Provisional Application No. 63/001,993, which is incorporated herein by reference in its entirety for all purposes.

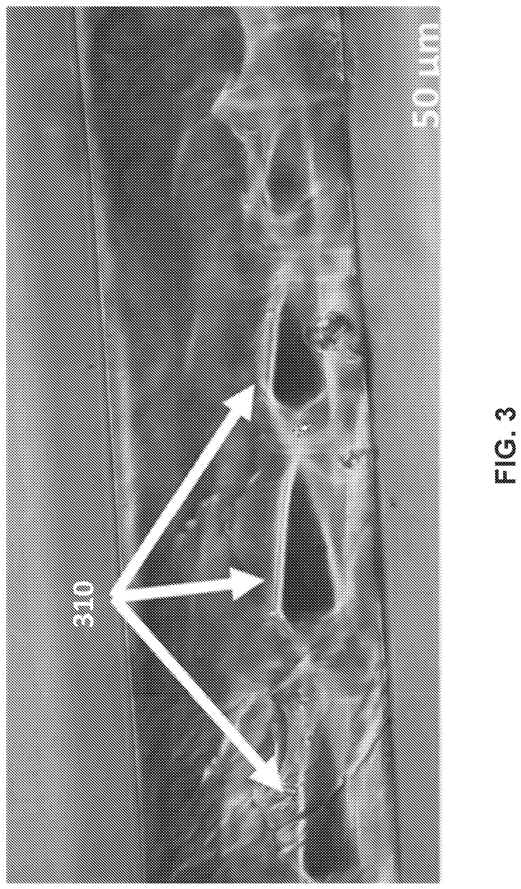

**FIG. 3** illustrates a cross section of an ophthalmic lens including a subsurface optical structure having multiple substructures 310. In some embodiments, the one or more processors may be configured to generate, based on the first phase-wrapped wavefront, energy output parameters for forming a first optical structure using an energy source. In some embodiments, the first optical structure may be configured to refract light directed at the retina of the patient so as to improve vision. In some embodiments, the optical structure may be a subsurface optical structure. For example, referencing the cross-section illustrated in **FIG. 3****,** the optical structure may be a subsurface optical structure having multiple substructures 310 that may be concentric. An example schematic of a top view of such a configuration is illustrate in **FIG. 2B,** with concentric substructures 14. These concentric substructures may be Fresnel rings that result in an ophthalmic lens that may be a Fresnel lens. The subsurface optical structures may be achieved by focusing laser pulses appropriately to depths within the ophthalmic lens to cause changes in refractive property to sub-volumes in the interior of the ophthalmic lens.

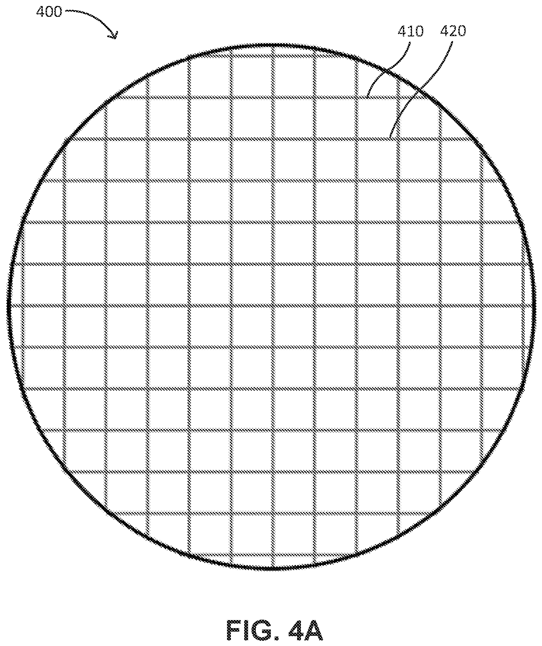

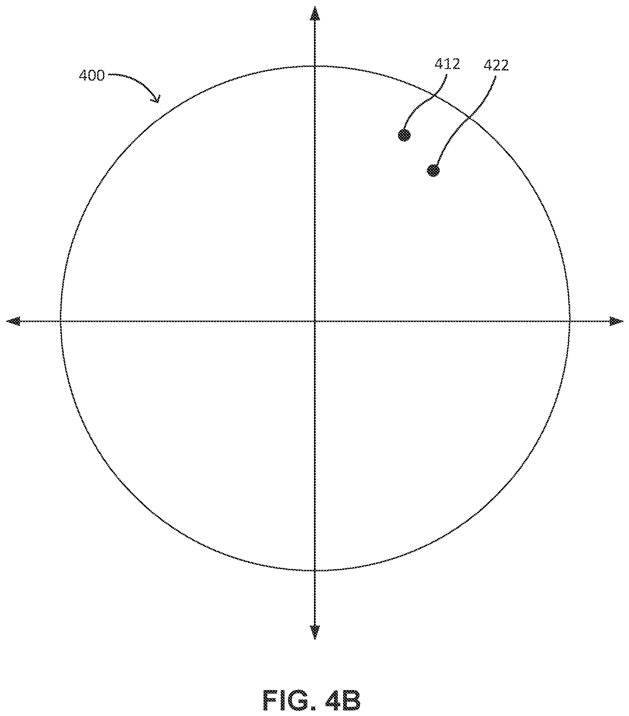

**FIGS. 4A-4B** illustrate example conceptualizations of an ophthalmic lens 400 that may be defined by a plurality of focal positions within the ophthalmic lens 400. In some embodiments, an ophthalmic lens may be divided up into a plurality of pixels, each pixel corresponding to a focal position. Such a pixel may be a sub-region or a sub-volume of an ophthalmic lens. **FIG. 4A** shows the ophthalmic lens 400 divided up into a plurality of pixels (e.g., the pixels 410 and 420) in a grid fashion. Although **FIG. 4A** illustrates uniform pixels that are square shaped, this disclosure contemplates that pixels may be of any suitable shape (e.g., hexagonal, pentagonal, circular, spiral) and that they may not be uniform (e.g., they may of different shapes and sizes). A pixel area may correspond to the resolution of an energy delivery system (e.g., a laser system) configured to form an optical structure corresponding to a phase-wrapped wavefront. That is, a pixel area may correspond to a minimum area of a subregion of the ophthalmic lens at which the energy delivery system may focus an energy beam (e.g., a femtosecond laser that emits pulsed laser beams, a continuous wave laser) to change a refractive index of the sub-volume associated with the sub-region. **FIG. 4B** illustrates another conceptualization of an ophthalmic lens, where the ophthalmic lens is not divided up into discrete pixels. Instead, the ophthalmic lens is mapped out using a coordinate system (e.g., a two-dimensional x-y coordinate system, a three-dimensional x-y-z coordinate system, or a polar coordinate system (radius and angle)). For example, the points 412 and 422 may each have a respective coordinate in the coordinate system. Although **FIGS. 4A-4B** are in two dimensions, it should be appreciated that ophthalmic lenses are three-dimensional, and focal positions may be defined in three dimensions.

In some embodiments, in order to create suitable subsurface structures, each focal position may need to have an energy beam directed at it at a predetermined power level (e.g., in Watts) for a predetermined period of time (e.g., a few nanoseconds to microseconds). For example, referencing **FIG. 4A****,** a first energy beam may be delivered (e.g., in femtosecond pulses) to the pixel 410 at a first power level for a first period of time, and a second energy beam may be delivered (e.g., in femtosecond pulses) to the pixel 420 at a second power level for a second period of time. Similarly, referencing **FIG. 4B****,** a first energy beam may be delivered (e.g., in femtosecond pulses) to the point 410 at a first power level for a first period of time, and a second energy beam may be delivered (e.g., in femtosecond pulses) to the point 420 at a second power level for a second period of time. Although **FIGS. 4A-4B** are two-dimensional, it is to be appreciated that the ophthalmic lenses are three-dimensional, and as such, the pixels or points may be defined in three dimensions (e.g., by three-dimensional coordinate system). For example, referencing **FIG. 4B****,** the point 412 may be defined by an x-y-z coordinate (e.g., with the z-coordinate specifying a depth at which energy is to be delivered in forming an optical structure).

As can be appreciated by the discussion above, forming optical structures and an ophthalmic lens requires coordinating both power and position of a laser beam. Forming optical structures requires high precision and resolution, such that a large number of focal positions (e.g., 10 million, 50 million) need to be targeted by an energy beam. Each of these focal positions on the ophthalmic lens will have associated a unique power level and a position value (e.g., a coordinate). A system that coordinates power and position of the laser beam must be able to adjust power levels and position the laser beam accurately across the large number of focal positions so as to create an effective ophthalmic lens. Furthermore, such a system must be able to do so rapidly to achieve sufficient throughput (e.g., because of the large number of focal positions required). This is especially the case when the ophthalmic lens is the human cornea of a patient, in which case the surface of the eye of the patient may need to be flattened or fixed to a degree during the treatment process. As such, it may be uncomfortable and/or unsafe to prolong the process for much longer than, for example, two minutes. In this example, performing a treatment that may involve 50 million focal positions in two minutes requires very rapid, precise coordination.

Disclosed herein are methods for coordinating a power and a position of a laser beam for forming subsurface optical structures in an ophthalmic lens. As described above, the subsurface optical structures may be volumes within the ophthalmic lens having adjusted refractive indexes such that they retract/diffract light in a desired manner (e.g., so as to correct or improve vision in a patient). Such a method may include loading an ordered list of power values on a memory associated with a power-control computing device, wherein the power values correspond to desired laser power levels for the laser beam.

The method may include receiving one or more treatment planning inputs, which may be inputs supplied by one or more of a physician, a manufacturer, etc. The treatment planning inputs may include any suitable information or parameters for creating a plan configured to form subsurface structures in an ophthalmic lens as desired, such as material specifications of the ophthalmic lens, desired optical changes (e.g., based on a prescription), pattern requirements, and system calibration information. For example, in the case of an ophthalmic lens that is a contact lens, the material specifications may include information about the material properties of the contact lens. As another example, in the case of an ophthalmic lens that is a human cornea, the material specifications may include information about the properties of the human cornea. As another example, the system calibration information may include information about the power of the laser beam or the actuators associated with of the galvos and stages (elements that will be described in further detail below).

In some embodiments, a treatment planning system may receive the treatment planning inputs and output a scanning control program. The scanning control program may include instructions for positioning a laser beam along different focal positions on an ophthalmic lens to achieve a desired pattern to achieve a desired treatment as determined based on the treatment planning inputs. In some embodiments, the treatment planning system may first output a pattern generation program that generates a treatment pattern for the ophthalmic lens, and the scanning control program may be generated based on this pattern generation program.

In some embodiments, the treatment planning system may also output a list of power data values (e.g., an ordered list of power data values that is ordered so as to map onto focal positions on the ophthalmic lens that would be expected at given times based on the scanning control program). The power data values may be based on the treatment planning inputs, a treatment pattern may be generated. In some embodiments, the treatment planning system may be a stand-alone system with dedicated software. In other embodiments, the treatment planning system may be a software module within the overarching coordination software further described herein.

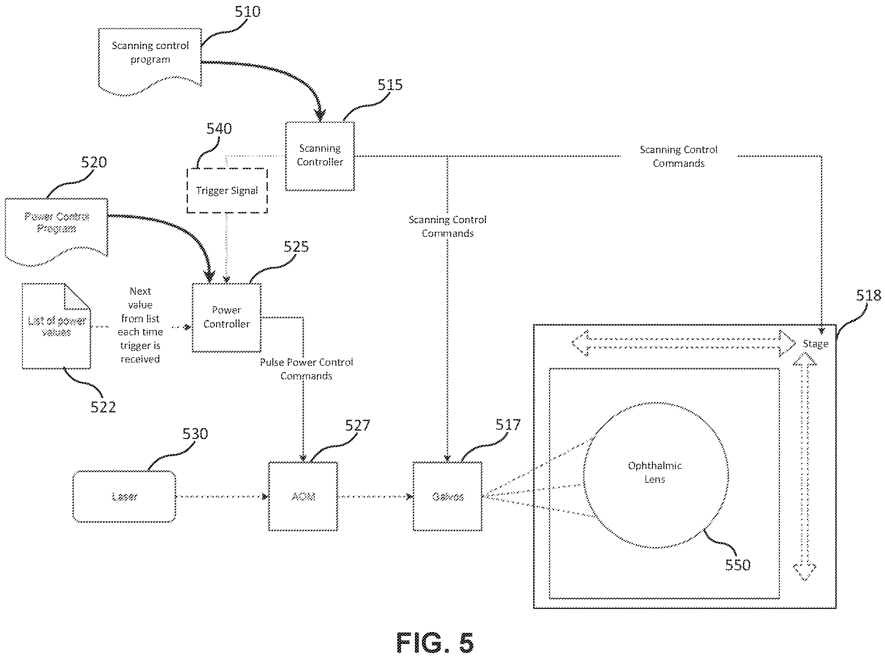

**FIG. 5** illustrates an example schematic of a system that coordinates the power and position of a laser beam. The method may include loading a scanning control program on a scanning-control computing device. In some embodiments, loading a scanning control program may include first loading a treatment pattern program, which the scanning-control computing device may use to generate the scanning control program. In other embodiments, the scanning control program may be loaded directly onto the scanning-control computing device. In some embodiments, the scanning-control computing device may be a programmable scanning controller that may be capable of controlling the position of a laser beam on an ophthalmic lens that is the subject of treatment. The scanning control program may include instructions for generating scanning control commands to position the laser beam, and the scanning-control computing device may execute these instructions to position the laser beam. For example, the scanning-control computing device may be capable of controlling a stage on which the ophthalmic lens rests (or on which a laser source rests) so as to translate the laser beam from a first position to a second position on the ophthalmic lens (e.g., from a first focal position to a second focal position). Additionally or alternatively, the scanning-control computing device may be capable of controlling galvos for adjusting a direction of the laser beam that is directed at the ophthalmic lens. Referencing the example illustrated in **FIG. 5****,** the scanning control program 510 may be loaded onto the scanning controller 515, which may issue scanning control commands based on the scanning control program 510 to the galvos 517 and/or the stage 518 so as to position the laser beam. Although the disclosure focuses on lasers and laser sources, the disclosure contemplates the use of any suitable energy beam from any suitable energy source. In some embodiments, the scanning control program may also include instructions corresponding to speeds associated with positioning the laser beam. For example, the scanning control program may include instructions for a speed at which galvos adjust the direction of the laser beam, and/or a speed at which the stage is moved to translate the laser beam. In some embodiments, the scanning control program may include instructions corresponding to periods of time during which the laser beam may be made to rest at a particular position.

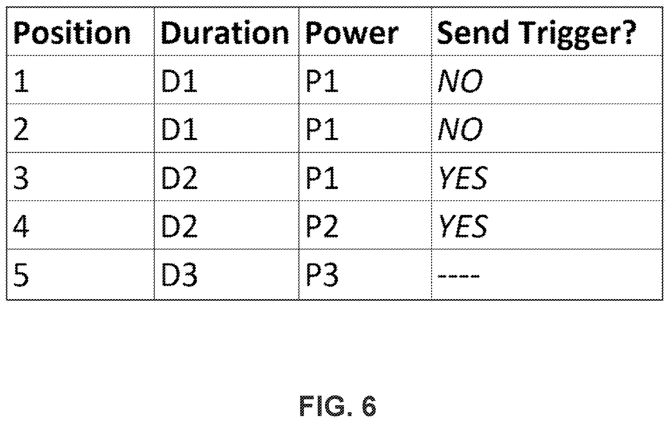

**FIG. 6** illustrates a table representing a subset of a treatment plan for forming an optical structural on an ophthalmic lens. The method may include causing the laser beam to be directed at a first power level toward a first focal position on the ophthalmic lens. For example, referencing **FIG. 6****,** a laser beam may be caused to be directed at a first focal position (e.g., focal position 1) at a first power level (e.g., P1). The power level may be characterized, for example, in Watts, or by any other suitable intensity measure. The first power level may correspond to a first power value on the ordered list of power values. As an example, the ordered list of power values may include power values P1, P2, P3, . . . , P*N*. In some embodiments, the power of the laser beam directed at the ophthalmic lens may be controlled by a power-control computing device, which in some embodiments may be a separate device from the scanning-control computing device. For example, referencing, **FIG. 5****,** the power of the laser beam directed at the ophthalmic lens may be controlled by the power controller 525 (e.g., a programmable I/O card). Separating the scanning controller 515 from the power controller 525 may be advantageous in that it provides dedicated devices for separately and simultaneously performing the processing tasks necessary for controlling these two aspects (power and position of the laser beam). Separating the scanning-control computing device from the power-control computing device may be advantageous in that it provides dedicated devices for separately and simultaneously performing the processing tasks necessary for controlling these two aspects (power and position of the laser beam). Such a configuration may significantly reduce the overall processing time, thereby allowing for higher throughput. In some embodiments, the power controller 525 may receive a power value (e.g., referencing **FIG. 6****,** corresponding to the power level P1) from the list of power values 522. The power controller 525 may then issue power control commands that are configured to adjust the power of the laser beam directed at the ophthalmic lens to a desired power level (e.g., P1). In some embodiments, as illustrated in **FIG. 5****,** the power of the laser beam may be controlled by the power controller 525 using an acousto-optic modulator (AOM) 527. The AOM 527 may include a piezoelectric transducer that vibrates a material (e.g., glass, quartz) through which an input laser beam from the laser 530 is made to travel. The power level of the laser beam pulse output from the AOM 527 can be controlled by controlling the vibration amplitude. This is known as the acousto-optic effect, which is a well-known phenomenon to one of skill in the art. The vibration may be varied between any suitable range so as to vary the power level of the laser beam between any suitable range. The AOM may be used to adjust the power level of the laser beam pulses very precisely at small increments in microsecond time frames with the switching performed by the AOM on the order of nanoseconds. In some embodiments, the AOM 527 may be able to reduce the power level to zero such that a laser beam is not made incident on the ophthalmic lens 550 for a period of time. Alternatively or additionally, a mechanical means (e.g., a physical shutter disposed somewhere between the laser 530 and the ophthalmic lens 550) may be used to ensure that a laser beam is not made incident on the ophthalmic lens 550 for a period of time. Although the disclosure focuses on using AOMs, the disclosure contemplates the use of any suitable device or means for modulating laser beams (or other suitable energies).

The method may include sending (e.g., by the scanning-control computing device) a first scanning control command to move the laser beam from the first focal position to a second focal position. For example, referencing FIG. 5, the first scanning control command may be a command to the galvos 517, to the stage 518, or to both the galvos 517 and the stage 518. Galvos, short for mirror galvanometers, may be used to change an angle of an incident beam and thereby change its direction and point of incidence on the ophthalmic lens 550. The galvos may make use of actuators that swivel or rotate mirrors and may make use of additional optical elements in concert with the galvos so as to steer an incident beam in a desired direction. The use of galvos to direct beams is well known. As mentioned above, the galvos 517 may be moved to change the direction of the laser beam as needed. In some embodiments, the stage 518 may be a structure on which the ophthalmic lens 550 is disposed, and the stage 518 may be movable (e.g., using one or more actuators) in two or three dimensions. For example, referencing **FIG**. **5****,** the stage 518 may be movable in two dimensions as indicated by the arrows (along the x-y plane) so as to move the ophthalmic lens 550 that is disposed on the stage 518. The stage 518 may also be movable in three dimensions (along the z-axis) so as to change the depth at which a laser beam is incident on the ophthalmic lens 550. In other embodiments, the stage may be a structure on which the laser rests. This may be the case, for example, where the ophthalmic lens itself remains stationary. For example, when the ophthalmic lens is a cornea of a patient, the ophthalmic lens may remain stationary while the stage, which may be disposed above the eye of the patient, may be moved (e.g., in three dimensions). As such, in this example, the patient does not need to be moved during a procedure on the patient's cornea. In some embodiments, the ophthalmic lens may be on a first stage and the laser may be on a second stage, such that both the ophthalmic lens and the laser may be movable by sending commands to actuators corresponding to their respective stages.

The method may include sending a first trigger signal to the power-control computing device. The first trigger signal may be an instruction configured to cause the power-control computing device to fetch a second power value. In some embodiments, the trigger signal may be sent by the scanning-control computing device to the power-control computing device. For example, referencing **FIG. 5****,** the trigger signal 540 may be sent by the scanning controller 515 to the power controller 525. In response, the power controller 525 may fetch, from the list of power values 522, a second power value. For instance, referencing **FIG**. **6****,** a trigger signal may be sent after a laser beam has been directed at focal position 3 at a power level of P1 for a duration of D2. In response, a new power value P2 may be fetched from the list of power values 522, such that when the laser beam is directed at focal position 4, the power level is set to P2 (as noted in the table illustrated in **FIG. 6**). In some embodiments, the list of power values 522 may be stored on a memory device that is communicatively coupled with the power controller 525. In some embodiments, the trigger signal may only be sent when a different power level is needed (e.g., as may be determined based on the scanning control program). For example, the scanning controller 515 may only send a trigger signal when it determines that the scanning control program 510 that is loaded on the scanning controller 515 requires a different power level. In these embodiments, the second power value that is fetched (and the corresponding second power level) is different from the first power value (and the corresponding first power level). In other embodiments, the trigger signal may be sent whenever the laser beam moves to a new focal position, or alternatively, the signal may be sent periodically (e.g., at regular time intervals).

The method may include causing (e.g., by the power-control computing device) the laser beam to be directed at the second focal position at a second power level corresponding to the second power value. For example, referencing **FIG. 5****,** the power controller 525 may send a laser power command to the AOM 527 instructing the AOM 527 to modulate an input laser beam received from the laser 530 in such a manner so as to make the output beam to have a second power level correspond to the second power value.

Varying the power level of the laser beam as it is made incident on a particular focal position varies the amount of refractive change at the particular focal position. In this way, subsurface structures with desired refractive/diffractive properties may be created in ophthalmic lens by moving the laser beam across the ophthalmic lens and varying power accordingly. In some embodiments, the amount of time a laser beam is made incident on a particular focal position can be varied so as to allow for further control. That is, increasing this duration for a particular focal position can cause a greater refractive change. In some embodiments, a desired duration may be achieved by allowing the laser beam to remain stationary at a particular focal position for a specified duration. In other embodiments, a desired duration may be achieved by varying the speed at which the laser beam moves from a first focal position to a second focal position. For example, reducing the speed at which the laser beam is moved from the first focal position to the second focal position increases the duration (e.g., at the first focal position and also at points between the first focal position and the second focal position). Similarly, increasing the speed at which the laser beam is moved from the first focal position to the second focal position reduces the duration.

The example in **FIG. 6** (with reference to the elements of **FIG**. **5**) is illustrative in tying all these concepts together. A treatment may start at focal position 1, where a laser beam is directed at a power level of P1 for a duration of D1. Next, one or more scanning control commands may be sent by the scanning controller 515 to the galvos 517 and/or the stage 518 so as to move the laser beam to focal position 2, where the laser beam is directed at the same power level of P1 for a duration of D1. Next, one or more scanning control commands may be sent by the scanning controller 515 so as to move the laser beam to focal position 3, where the beam is directed at the same power level of P1 for a duration of D2. At this point, the scanning controller 515 may determine that a trigger signal 540 needs to be sent because the next focal position (focal position 4) requires a different power level. As such, the scanning controller 515 may send such a trigger signal 540 to the power controller 525, which may fetch a power value from the list of power values 522 (e.g., the power value corresponding to P2, which may be next in sequence from the power value corresponding to P1 on the list of power values 522). The power controller 525 may then send a power control command to the AOM 527 so as to adjust the power level of the laser beam to the power level P2. The scanning controller 515 may also send scanning control commands configured to move the galves 517 and/or the stage 518 so as to direct the laser beam at focal position 4 for a duration of D2. Another trigger signal 540 may be sent so as to fetch a new power value that corresponds to the power level P3, and the laser beam may be directed at focal position 5 for a duration of D3. This process may continue until all focal positions on the ophthalmic lens are treated (e.g., 2-10 million focal positions). Although this discussion of **FIG. 6** suggests achieving desired durations by allowing the laser beam to remain stationary for a desired period, the disclosure contemplates that the desired durations may be achieved by varying the speed at which the laser beam moves (as described previously).

**FIG**. **7** illustrates an example schematic of the system shown in **FIG**. **5****,** but from a different viewpoint so as to depict how a central system software module 710 coordinates the power and position of a laser beam in the manner described above. As illustrated, a scanning control program 510 and a list of power values 522 may be loaded onto a computing device, and may be accessed by a system software module 710 being executed on the computing device. In some embodiments, the computing device may receive commands from the user 705 as user inputs for the system software module 710. In some embodiments, the system software module 710 may also output information such as status information to the user 705. For example, the system software module 710 may output information about progress for completing a substructure in an ophthalmic lens (e.g., showing a percentage of completion).

In some embodiments, the system software module 710 may load one or more scanning control programs onto the scanning controller 515, which sends scanning control commands to actuate one or more galvos 517 and/or one or more stages 518. In some embodiments, the system software module 710 may load one or more power control programs onto the power controller 525 (e.g., a programmable I/O card), which sends laser power commands to the AOM 525 so as to modulate laser power). Such power control programs may include instructions for generating power control commands for modulating the power of a laser beam (e.g., instructions to the AOM 525 to effect such modulation) to a desired power level. In some embodiments, the system software module 710 may send commands directly to the power controller 525 and/or the scanning controller 515.

In some embodiments, the system software module 710 may load onto a memory buffer 722 the list of power values 522. As discussed previously, the scanning controller 515 may, based on the scanning control program 510, send trigger signals 540 whenever a new power value is needed. When the trigger signal is received, the power controller 525 may access the memory buffer 722 to retrieve a next power value from the list of power values 522 (or alternatively, the next power value be pushed to the power controller 525). In some embodiments, the power controller 525 may send power control commands to the AOM 527 to modulate the laser beam according to a current power value (e.g., the power value that was most recently fetched from the memory buffer 722).

In some embodiments, the system software module 710 may receive feedback information from the power controller 525 and/or the scanning controller 515. This feedback information may include status information. In some embodiments, the status information may be used to determine errors or fault conditions at the level of the power controller 525 or the scanning controller 515. For example, status information from the scanning controller 515 may be used to determine if there are mechanical issues with the actuators of the galvos 517 and/or the stage 518. As another example, status information from the scanning controller 515 may send back in error if the system software module 715 issues a command that attempts to make an actuator (e.g. of the stage 518 and/or the galvos 517) move too quickly. As another example, status information from the power controller 525 or the scanning controller 515 may be used to determine if there is a corruption in any of their respective programs. As another example, status information from the power controller 525 or the scanning controller 515 may send back information that may be used to determine if there is an electrical short, if a cable is loose, or any other such electrical issues. In some embodiments, there may be a submodule within the system software module 710 that may be capable of receiving these statuses, determining an error or fault condition, and either resolving the error or fault condition or sending a notification to the user 705 via a user interface. In some embodiments, this submodule may continuously (e.g., periodically) monitor the system for errors.

In some embodiments, the system software module 710 may be able to coordinate the power levels and positions of multiple laser beams on multiple ophthalmic lenses. For example, the system software module 710 may be able to simultaneously or near-simultaneously coordinate the power levels and positions of five different lasers to form subsurface structures in five different ophthalmic lenses (e.g., five contact lenses). This can significantly improve throughput. Building on the previous example, if the five ophthalmic lenses are all to have the same subsurface structures, the same set of commands could be sent to five different sets of AOMs and actuators (e.g., actuators for galvos and/or stages). This would significantly reduce the need for processing resources in executing the processes required to coordinate power and position of the laser beams, because many of the processing tasks (e.g., the execution of the scanning control program, the sending of trigger signals, the accessing of power values from a memory buffer to fetch in next power value, etc.) only need to be performed once for each corresponding focal position of the five different ophthalmic lenses.

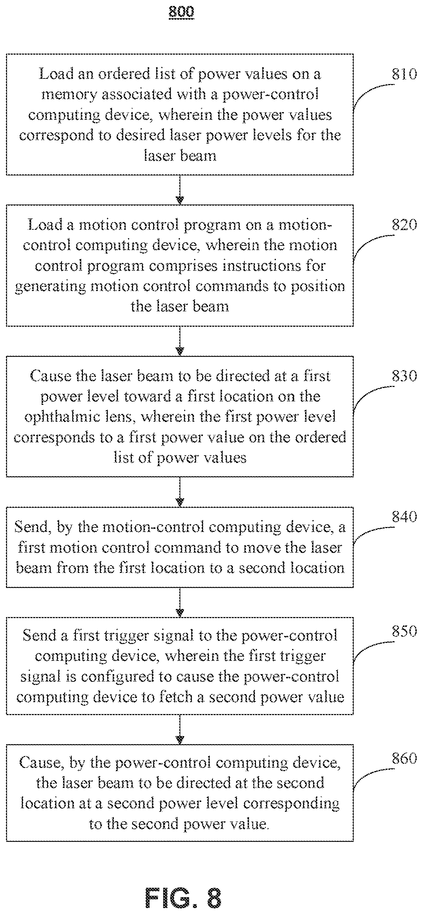

FIG. 8 illustrates a method 800 (not covered by the present invention) for coordinating a power and a position of a laser beam for forming a subsurface optical structure in an ophthalmic lens (e.g., for improving vision in a patient). The method may include, at step 810, loading an ordered list of power values on a memory associated with a power-control computing device, wherein the power values correspond to desired laser power levels for the laser beam. At step 820, the method may include loading a scanning control program on a scanning-control computing device, wherein the scanning control program includes instructions for generating scanning control commands to position the laser beam. At step 830, the method may include causing the laser beam to be directed at a first power level toward a first focal position on the ophthalmic lens, wherein the first power level corresponds to a first power value on the ordered list of power values. At step 840, the method may include sending, by the scanning-control computing device, a first scanning control command to move the laser beam from the first focal position to a second focal position. At step 850, the method may include sending a first trigger signal to the power-control computing device, wherein the first trigger signal is configured to cause the power-control computing device to fetch a second power value. At step 860, the method may include causing, by the power-control computing device, the laser beam to be directed at the second focal position at a second power level corresponding to the second power value.

Particular embodiments may repeat one or more steps of the method of FIG. 8, where appropriate. Although this disclosure describes and illustrates particular steps of the method of **FIG. 8** as occurring in a particular order, this disclosure contemplates any suitable steps of the method of **FIG. 8** occurring in any suitable order. Moreover, although this disclosure describes and illustrates an example method for coordinating a power and a position of a laser beam for forming a subsurface optical structure in an ophthalmic lens, including the particular steps of the method of **FIG. 8****,** this disclosure contemplates any suitable method for coordinating a power and a position of a laser beam for forming a subsurface optical structure in an ophthalmic lens, including any suitable steps, which may include all, some, or none of the steps of the method of **FIG. 8****,** where appropriate. Furthermore, although this disclosure describes and illustrates particular components, devices, or systems carrying out particular steps of the method of **FIG**. **8****,** this disclosure contemplates any suitable combination of any suitable components, devices, or systems carrying out any suitable steps of the method of **FIG**. **8****.** Finally, although the steps of the method of **FIG. 8** are listed as distinct steps, the disclosure contemplates that any of the steps may be performed in combination (e.g., simultaneously and concurrently).

**FIG**. **9** illustrates a method 900 (not covered by the present invention) for controlling a laser beam pulse scanning device and a laser beam pulse power-control device to form a subsurface optical structure in an ophthalmic lens. The method may include, at step 910, storing focal positions for a sequence of laser beam pulses in a scanning controller configured for controlling operation of a scanning assembly to scan the focal positions of the sequence of laser beam pulses in the ophthalmic lens. At step 920, the method may include storing power values for the sequence of laser beam pulses in a power controller configured for controlling operation of a power control assembly to control pulse power of the sequence of laser beam pulses. At step 930, the method may include synchronizing operation of the scanning controller with operation of the power controller during scanning of the sequence of laser beam pulses in the ophthalmic lens via communication of one or more trigger signals between the scanning controller and the power controller.

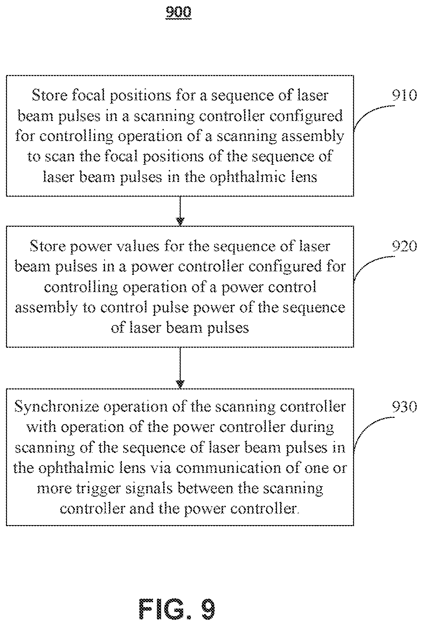

Particular configurations may repeat one or more steps of the method of **FIG. 9****,** where appropriate. Although this disclosure describes and illustrates particular steps of the method of **FIG**. **9** as occurring in a particular order, this disclosure contemplates any suitable steps of the method of **FIG. 9** occurring in any suitable order. Moreover, although this disclosure describes and illustrates an example method for controlling a laser beam pulse scanning device and a laser beam pulse power-control device to form a subsurface optical structure in an ophthalmic lens, including the particular steps of the method of **FIG**. **9****,** this disclosure contemplates any suitable method for controlling a laser beam pulse scanning device and a laser beam pulse power-control device to form a subsurface optical structure in an ophthalmic lens, including any suitable steps, which may include all, some, or none of the steps of the method of **FIG. 9****,** where appropriate. Furthermore, although this disclosure describes and illustrates particular components, devices, or systems carrying out particular steps of the method of **FIG. 9****, this** disclosure contemplates any suitable combination of any suitable components, devices, or systems carrying out any suitable steps of the method of **FIG**. **9****.** Finally, although the steps of the method of **FIG**. **9** are listed as distinct steps, the disclosure contemplates that any of the steps may be performed in combination (e.g., simultaneously and concurrently).

Example 2 not covered by the present invention is the method of example 1, further comprising: loading a power control program into the pulse power controller, wherein the power control program comprises instructions for generating power control commands for controlling the power control assembly to control pulse powers of the sequence of laser beam pulses; and loading a scanning control program into the scanning controller, wherein the scanning control program comprises instructions for controlling operation of the scanning assembly to control scanning of the sequence of laser beam pulses to the focal positions in the ophthalmic lens.

Example 3 not covered by the present invention is the method of example 1, wherein the pulse power controller comprises a digital input/output (I/O) card.

Example 4 not covered by the present invention is the method of example 1, wherein: each of the one or more trigger signals comprises an instruction to retrieve a new pulse power data value from the memory; and the new pulse power data value corresponds to a pulse power for a laser beam pulse that is next in the sequence of laser beam pulses.

Example 5 not covered by the present invention is the method of example 1, further comprising loading a scanning control program into the scanning controller, wherein scanning control program controls transmission of the one or more trigger signals.

Example 6 is the method of example 1, further comprising controlling an acousto-optic modulator disposed in between a laser pulse source and the ophthalmic lens to control pulse powers of the sequence of laser beam pulses scanned to the focal positions in the ophthalmic lens.

Example 7 is the method of example 1, further comprising controlling an electro-optic modulator disposed in between a laser pulse source and the ophthalmic lens to control pulse powers of the sequence of laser beam pulses scanned to the focal positions in the ophthalmic lens.

Example 8 is the method of example 1, further comprising: receiving a definition of the subsurface optical structure; and generating the focal positions and pulse powers of the sequence of laser beam pulses based on the definition of the subsurface optical structure.

Example 9 is the method of example 1, further comprising determining one or more scanning speeds for scanning the sequence of laser beam pulses to the focal positions in the ophthalmic lens.

## Claims

1. A system for coordinating pulse power and focal positions for a sequence of laser beam pulses for forming a subsurface optical structure in an ophthalmic lens (550), the system comprising:
a laser beam pulse source (530) operable to emit the sequence of laser beam pulses;
a scanning assembly (517) operable to scan the sequence of laser beam pulses to focal positions within the ophthalmic lens (550);
a movable stage (518);
the system being **characterised by**:
a power-control computing device (525) comprising a power-control memory, wherein the power-control memory is configured to store an ordered list of pulse power data values (522) corresponding to pulse power values for the sequence of laser beam pulses;
a power control assembly (527) operable to control pulse power of each of the sequence of laser beam pulses; and
a scanning-control computing device (515) comprising a scanning-control memory, wherein the scanning-control memory stores a scanning control program (510) comprising instructions for controlling a scanning assembly (517, 518) to direct the sequence of laser beam pulses to the focal positions in the ophthalmic lens (550);
wherein:
the scanning-control computing device (515) is configured to send a trigger signal (540) to the power-control computing device (525) to cause the power-control computing device (525) to sequentially fetch a pulse power data value from the ordered list of pulse power data values (522);
the trigger signal (540) is generated by the scanning-control computing device (515);
the scanning control program (510) is configured to control transmission of the trigger signal
(540) by the scanning-control computing device (515);
the power-control computing device (525) is configured to control the power control assembly (527) based on the pulse power data value to control pulse power of a laser beam pulse of the sequence of laser beam pulses;
the scanning control program (510) is configured to specify when a new pulse power data value
is needed; wherein
the new pulse power data value is next in sequence to a current pulse power data value on the ordered list of pulse power data values (522).

2. The system of claim 1, wherein the power-control computing device (525) comprises a digital input/output, I/O, card.

3. The system of claim 1, wherein the scanning-control computing device (515) comprises a programmable scanning controller.

4. The system of any one of claims 1 through 3, wherein:
the scanning assembly (517, 518) comprises one or more laser galvos (517) and a depth of focus mechanism;
the one or more laser galvos (517) are configured to be operable to control direction of each of the sequence of laser beam pulses in two directions transverse to a direction of propagation of the laser beam pulse; and
the depth of focus mechanism is configured to be operable to control depth of focus for each of the sequence of laser beam pulses in the direction of propagation of the laser beam pulse.

5. The system of any one of claims 1 through 4 in combination with an ophthalmic lens (550), wherein:
the ophthalmic lens (550) is disposed on the movable stage (518); and
the scanning-control computing device (515) is configured to control the positioning of the movable stage (518) relative to the laser beam pulse source (530).

6. The system of any one of claims 1 through 4, wherein:
the laser beam pulse source (530) is disposed on the movable stage (518); and
the scanning-control computing device (515) is configured to control the positioning of the movable stage (518) relative to the ophthalmic lens (550).

7. The system of claim 1, wherein the power control assembly (527) comprises an acousto-optic modulator (527).

8. The system of claim 1, wherein the power control assembly (527) comprises an electro-optic modulator.

## Patentansprüche

1. System zum Koordinieren einer Impulsleistung und von Fokuspositionen für eine Sequenz von Laserstrahlimpulsen zum Ausbilden einer optischen Teiloberflächenstruktur in einer ophthalmischen Linse (550), wobei das System Folgendes umfasst:
eine Laserstrahlimpulsquelle (530), die betriebsfähig ist, eine Sequenz von Laserstrahlimpulsen zu emittieren;
eine Abtastbaugruppe (517), die betriebsfähig ist, die Sequenz von Laserstrahlimpulsen auf Fokuspositionen innerhalb der ophthalmischen Linse (550) abzutasten;
eine bewegliche Plattform (518);
wobei das System durch Folgendes gekennzeichnet ist:
eine Leistungssteuerrechenvorrichtung (525), die einen Leistungssteuerspeicher umfasst, wobei der Leistungssteuerspeicher konfiguriert ist, um eine geordnete Liste von Impulsleistungsdatenwerten (522) zu speichern, die den Impulsleistungswerten für die Sequenz von Laserstrahlimpulsen entsprechen;
eine Leistungssteuereinheit (527), die betriebsfähig ist, um die Impulsleistung jedes der Sequenz von Laserstrahlimpulsen zu steuern; und
eine Abtaststeuerrechenvorrichtung (515), die einen Abtaststeuerspeicher umfasst, wobei der Abtaststeuerspeicher ein Abtaststeuerprogramm (510) speichert, das Anweisungen zum Steuern einer Abtastbaugruppe(517, 518) umfasst, um die Sequenz von Laserstrahlimpulsen auf die Fokuspositionen in der ophthalmischen Linse (550) zu richten;
wobei:
die Abtaststeuerrechenvorrichtung (515) konfiguriert ist, um ein Auslösesignal (540) an die Leistungssteuerrechenvorrichtung (525) zu senden, um die Leistungssteuerrechenvorrichtung (525) zu veranlassen, nacheinander einen Impulsleistungsdatenwert aus der geordneten Liste der Impulsleistungsdatenwerte (522) abzurufen;
das Auslösesignal (540) von der Abtaststeuerrechenvorrichtung (515) erzeugt wird;
das Abtaststeuerprogramm (510) konfiguriert ist, um die Übertragung des Auslösesignals (540) durch die Abtaststeuerrechenvorrichtung (515) zu steuern;
die Leistungssteuerrechenvorrichtung (525) konfiguriert ist, um die Leistungssteuerbaugruppe (527) auf Grundlage des Impulsleistungsdatenwerts zu steuern, um die Impulsleistung eines Laserstrahlimpulses der Sequenz von Laserstrahlimpulsen zu steuern;
das Abtaststeuerprogramm (510) konfiguriert ist, um zu spezifizieren, wann ein neuer Impulsleistungsdatenwert benötigt wird;
wobei der neue Impulsleistungsdatenwert in der geordneten Liste der Impulsleistungsdatenwerte (522) nach einem aktuellen Impulsleistungsdatenwert liegt.

2. System nach Anspruch 1, wobei die Leistungssteuerrechenvorrichtung (525) eine digitale Eingabe-/Ausgabekarte, E/A-Karte, umfasst.

3. System nach Anspruch 1, wobei die Abtaststeuerrechenvorrichtung (515) eine programmierbare Abtaststeuervorrichtung umfasst.

4. System nach einem der Ansprüche 1 bis einschließlich 3, wobei:
die Abtastbaugruppe (517, 518) einen oder mehrere Laser-Galvo-Scanner (517) und einen Tiefenschärfemechanismus umfasst;
der eine oder die mehreren Laser-Galvo-Scanner (517) konfiguriert sind, um betriebsfähig zu sein, um die Richtung jedes der Sequenz der Laserstrahlimpulse in zwei Richtungen quer zu einer Ausbreitungsrichtung des Laserstrahlimpulses zu steuern; und
der Tiefenschärfemechanismus konfiguriert ist, um die Tiefenschärfe für jeden der Sequenz der Laserstrahlimpulse in der Ausbreitungsrichtung des Laserstrahlimpulses zu steuern.

5. System nach einem der Ansprüche 1 bis einschließlich 4 in Kombination mit einer ophthalmischen Linse (550), wobei:
die ophthalmische Linse (550) auf der beweglichen Plattform (518) angeordnet ist; und
die Abtaststeuerrechenvorrichtung (515) konfiguriert ist, um die Positionierung der beweglichen Plattform (518) relativ zu der Laserstrahlimpulsquelle (530) zu steuern.

6. System nach einem der Ansprüche 1 bis einschließlich 4, wobei:
die Laserstrahlimpulsquelle (530) auf der beweglichen Plattform (518) angeordnet ist; und
die Abtaststeuerrechenvorrichtung (515) konfiguriert ist, um die Positionierung der beweglichen Plattform (518) relativ zu der ophthalmischen Linse (550) zu steuern.

7. System nach Anspruch 1, wobei die Leistungssteuerbaugruppe (527) einen akustooptischen Modulator (527) umfasst.

8. System nach Anspruch 1, wobei die Leistungssteuerbaugruppe (527) einen elektrooptischen Modulator umfasst.

## Revendications

1. Système destiné à coordonner une puissance d'impulsion et des positions focales pour une séquence d'impulsions de faisceau laser pour former une structure optique de subsurface dans une lentille ophtalmique (550), le système comprenant :
une source d'impulsions de faisceau laser (530) exploitable pour émettre la séquence d'impulsions de faisceau laser ;
un ensemble de balayage (517) exploitable pour balayer la séquence d'impulsions de faisceau laser vers des positions focales à l'intérieur de la lentille ophtalmique (550) ;
une plate-forme mobile (518) ;
le système étant **caractérisé par** :
un dispositif informatique de commande de puissance (525) comprenant une mémoire de commande de puissance, la mémoire de commande de puissance étant configurée pour stocker une liste ordonnée de valeurs de données de puissance d'impulsion (522) correspondant à des valeurs de puissance d'impulsion pour la séquence d'impulsions de faisceau laser ;
un ensemble de commande de puissance (527) exploitable pour commander la puissance d'impulsion de chaque impulsion de la séquence d'impulsions de faisceau laser ; et
un dispositif informatique de commande de balayage (515) comprenant une mémoire de commande de balayage, la mémoire de commande de balayage stockant un programme de commande de balayage (510) comprenant des instructions pour commander un ensemble de balayage (517, 518) pour diriger la séquence d'impulsions de faisceau laser vers les positions focales dans la lentille ophtalmique (550) ;
dans lequel :
le dispositif informatique de commande de balayage (515) est configuré pour envoyer un signal de déclenchement (540) au dispositif informatique de commande de puissance (525) pour amener le dispositif informatique de commande de puissance (525) à extraire séquentiellement une valeur de données de puissance d'impulsion de la liste ordonnée de valeurs de données de puissance d'impulsion (522) ;
le signal de déclenchement (540) est généré par le dispositif informatique de commande de balayage (515) ;
le programme de commande de balayage (510) est configuré pour commander la transmission du signal de déclenchement (540) par le dispositif informatique de commande de balayage (515) ;
le dispositif informatique de commande de puissance (525) est configuré pour commander l'ensemble de commande de puissance (527) sur la base de la valeur de données de puissance d'impulsion pour commander la puissance d'impulsion d'une impulsion de faisceau laser de la séquence d'impulsions de faisceau laser ;
le programme de commande de balayage (510) est configuré pour indiquer quand une nouvelle valeur de données de puissance d'impulsion est nécessaire ;
dans lequel la nouvelle valeur de données de puissance d'impulsion est la suivante dans la séquence d'une valeur de données de puissance d'impulsion actuelle dans la liste ordonnée des valeurs de données de puissance d'impulsion (522).

2. Système selon la revendication 1, dans lequel le dispositif informatique de commande de puissance (525) comprend une carte d'entrée/sortie, E/S, numérique.

3. Système selon la revendication 1, dans lequel le dispositif informatique de commande de balayage (515) comprend un dispositif de commande de balayage programmable.

4. Système selon l'une quelconque des revendications 1 à 3, dans lequel :
l'ensemble de balayage (517, 518) comprend un ou plusieurs lasers galvanométriques (517) et un mécanisme de profondeur de foyer ;
le ou les lasers galvanométriques (517) sont configurés pour être exploitables pour commander la direction de chaque impulsion de la séquence d'impulsions de faisceau laser dans deux directions transversales à la direction de propagation de l'impulsion de faisceau laser ; et
le mécanisme de profondeur de foyer est configuré pour être exploitable pour commander la profondeur de foyer pour chaque impulsion de la séquence d'impulsions de faisceau laser dans la direction de propagation de l'impulsion de faisceau laser.

5. Système selon l'une quelconque des revendications 1 à 4 en association avec une lentille ophtalmique (550), dans lequel :
la lentille ophtalmique (550) est disposée sur la plate-forme mobile (518) ; et
le dispositif informatique de commande de balayage (515) est configuré pour commander le positionnement de la plate-forme mobile (518) par rapport à la source d'impulsions de faisceau laser (530).

6. Système selon l'une quelconque des revendications 1 à 4, dans lequel :
la source d'impulsions de faisceau laser (530) est disposée sur la plate-forme mobile (518) ; et
le dispositif informatique de commande de balayage (515) est configuré pour commander le positionnement de la plate-forme mobile (518) par rapport à la lentille ophtalmique (550).

7. Système selon la revendication 1, dans lequel l'ensemble de commande de puissance (527) comprend un modulateur acousto-optique (527).

8. Système selon la revendication 1, dans lequel l'ensemble de commande de puissance (527) comprend un modulateur électro-optique.
